# EUROPEAN PATENT APPLICATION

(11) **EP 2 320 105 A2**
(43) Date of publication of application: **11.05.2011**
(21) Application number: 10003818.1
(22) Date of filing: 09.04.2010
(51) Int. Cl.: F16D 51/22, F16D 65/14, F16G 11/10

(54) **A cable end retention clip assembly and method for a brake actuating lever**

(30) Priority: 05.11.2009 US 258265 P; 19.03.2010 US 727563
(71) Applicant: Akebono Corporation (North America), Elizabethtown KY 42701 (US)
(72) Inventor: Narayanan V, Lakshmi, Farmington, Michigan 48335 (US); Layton, Charles T., Beverly Hills, Michigan 48025 (US)
(74) Representative: Bawden, Peter Charles

(57) **Abstract**

The present invention is premised upon a clip and housing plate assembly (10) capable of ("to accommodate") loading, unloading and retaining a cable end within the housing plate assembly. All used in a drum brake assembly and where the cable end (82) is part of a cable assembly (80) for a parking brake. The clip and housing plate assembly having clip member (20) and a housing plate member and wherein the clip member is generally disposed outside an outer surface (or inside an inside surface) of the of the housing plate member and rotatably connected thereto via a housing rotational feature (42).

## Description

### CLAIM OF PRIORITY

The present application claims the benefit of the filing date of U.S. Provisional Application Nos. 61/258265 filed on 09 November 2009, the contents of which are hereby incorporated by reference in their entirety.

### FIELD OF THE INVENTION

The present invention relates to a cable end retention clip assembly and method of using such, more particularly to a retention clip and method for a control cable of a brake system of a vehicle.

### BACKGROUND

Efforts to improve the state of the art in the area of brake assemblies continue to elicit considerable inventive energy. Of particular interest is the desire to optimize the design of various brake assembly components and the system as a whole. Optimizing the system design such that it can be relatively low mass, having efficient use of materials, and allowing generous manufacturing tolerances, all without giving up on the requirements of having a robust system that meets desired performance requirements. One design element of the typical brake system is the use of cable assemblies to actuate various brake system components and the integration of such a cable assembly is the subject of the present invention. In the past, there have been various attempts to integrate cable assemblies into the brake systems, to allow relatively easy assembly and to have robust retention characteristics. It is believed that the retention aspect of the design may have particular importance when the cable end is not held in-place by a tensioning force (e.g. when the brake system is fully installed in a vehicle). The products known in the art appear to serve this function to some extent, but do not allow for as much design flexibility as may be desirous or may require excessively tight manufacturing tolerances. In one example, the product taught in US Patent 6,732,840, utilizes a stationary tab that protrudes from the housing assembly as a retention device, but is believed not to be effective 100% of the time. In another example, the product taught in Japanese Patent JP4104811, utilizes a relatively complex clip with a snapping feature that has multiple undulations and is dependent upon a geometric relationship between a stamped hole and a formed bridge section of the housing assembly. It is believed that one skilled in the art would recognize that both examples require excessively tight manufacturing tolerances in comparison to the present invention and the present invention makes assembly of the cable assembly relatively easy and retention robust

Among the literature that may pertain to this technology include the following patent documents: US 6,234,281; US 6,679,354: US 6,732,840; and JP4104811, all incorporated herein by reference for all purposes.

### SUMMARY OF THE INVENTION

The present invention is directed to a unique solution to one or more of the problems discussed above. It is believed that the present invention provides a unique design and method of use of a cable end retention clip that allows for greater design flexibility in the components of the brake system and provides an easier and more robust installation/retention mechanism for the cable assembly. Particularly, the present invention allows for robust retention of the cable end when the cable assembly is not under a tensional load (e.g. control system of a brake or other system that uses such cable ends and assemblies).

Accordingly, pursuant to a first aspect of the present invention, there is contemplated a clip and housing plate assembly capable of loading, unloading and retaining a cable end within the housing plate assembly including: a clip member including: a first clip rotational feature disposed on a first clip wall portion, an opposing second rotational feature disposed on a second clip wall portion, a middle clip wall portion connectively spanning between the first and second clip wall portions, and at least one clip locking feature disposed on the first clip wall portion, the second clip wall portion, or both; a housing plate member including: a first housing rotational feature disposed on a first housing wall portion, an opposing second rotational feature disposed on a second housing wall portion, and at least one housing locking feature disposed on the first housing wall portion, the second housing wall portion, or both; a lever assembly disposed between the first and second housing wall portion and rotationally connected to the housing plate member, the lever assembly including a nesting portion adapted to mate with the cable end; and wherein the clip member is disposed at least partially outside an outer surface of the of the housing plate member and rotatably connected thereto.

The invention may be further characterized by one or any combination of the features described herein, such as: the cable end comprises a barrel-type end portion with a diameter value of at least 1mm and a transverse length of at least 125% of the diameter value; the cable end comprises a clevis-pin type cable end; the cable end comprises a vertical (spherical) barrel-type cable end; the cable end comprises an eyelet-type cable end; the lever assembly is rotatably connected to the housing plate member at a rearward portion area of the housing plate member, between the first and second housing wall portions and such that at least 50% of the nesting portion is disposed forward of a middle housing wall portion, the middle housing wall portion connectively spanning between the first and second housing wall portions; the nesting portion comprise two opposing plates with a gapping portion therebetween with a gapping distance value at least the same as the diameter value of the cable end but not greater than the transverse length of the cable end; the first clip rotational feature comprises a first through hole in the clip member and the second clip rotational feature comprises a tab member that projects away from the second clip wall portion in a direction towards the first clip wall portion; the first housing rotational feature comprises a three dimensional profile that projects away from the outer surface of the of the housing plate member and the second housing rotational feature comprises a first housing through-hole; the at least one clip locking feature comprises a second through hole in the clip member and the at least one housing locking feature comprises a three dimensional profile that projects away from the outer surface of the of the housing plate member; the at least one clip locking feature comprises a ramp portion on the clip member and the at least one housing locking feature comprises a three dimensional profile that projects away from the outer surface of the of the housing plate member; during installation or removal of the cable end, the clip member is rotatably disposed towards an open loading position and further wherein during retention of the cable end, is rotatably disposed in a lock position, wherein the at least one clip locking feature and the at least one housing locking feature are engaged; when the clip and housing plate assembly is in the lock position, the middle clip wall portion is disposed above the nesting portion and the cable end and is disposed above an upper edge portion of the housing plate member no more than an axial distance equivalent of 125% of that of a cable end diameter; when the clip and housing plate assembly is the lock position, the middle clip wall portion is at least partially touching the nesting portion, the cable end, or both; the clip and housing plate assembly are part of a drum brake assembly and the cable end is part of a cable assembly for a parking brake.

Accordingly, pursuant to another aspect of the present invention, there is contemplated a method of loading and retaining a cable end of a cable assembly in a clip and housing plate assembly according to any of the preceding claims comprising the steps of: a. providing the clip and housing plate assembly wherein the clip member is rotatably disposed towards the open loading position; b. feeding the cable end through a bottom opening between the two opposing housing plate members; c. nesting the cabin end into the nesting portion; d. rotating the clip member towards the lock position; and e. engaging the at least one clip locking feature to the at least one housing locking feature, thus loading and retaining the cable end into the clip and housing plate assembly.

It should be appreciated that the above referenced aspects and examples are nonlimiting, as others exist within the present invention, as shown and described herein.

### DESCRIPTION OF THE DRAWINGS

FIG. 1 is a plan view of a drum brake with an exemplary clip and housing plate assembly according to the present invention.
FIG. 2 is a perspective view of an exemplary clip and housing plate assembly with the clip in a forward (open) position with a cable assembly according to the present invention.
FIG. 3 is a perspective view of an exemplary clip and housing plate assembly with the clip in a closed and locked position with a cable assembly according to the present invention.
FIG. 4 is a perspective view of another exemplary clip and housing plate assembly with the clip in a forward (open) position with a cable assembly according to the present invention.
FIG. 5 is a perspective view of another exemplary clip and housing plate assembly with the clip in a closed and locked position with a cable assembly according to the present invention.
FIG. 6 is a perspective view of another exemplary clip and housing plate assembly with the clip in a forward (open) position with a cable assembly according to the present invention.
FIG. 7 is a perspective view of another exemplary clip and housing plate assembly with the clip in a closed and locked position with a cable assembly according to the present invention.
FIG. 8 is a perspective view of another exemplary clip and housing plate assembly with the clip in a closed and locked position with a cable assembly according to the present invention.
FIGS. 9A and 9B are a perspective views (right and left) of another exemplary clip and housing plate assembly with the clip in a closed and locked position with a cable assembly according to the present invention
FIG. 10 is a perspective view of an exemplary housing plate member according to the present invention.
FIG. 11 is a perspective view of another exemplary housing plate member according to the present invention.
FIG. 12 is a perspective view of another exemplary housing plate member according to the present invention.
FIG. 13 is a perspective view of an exemplary clip according to the present invention.
FIG. 13A is a perspective view of another exemplary clip according to the present invention.
FIG, 14 is a perspective view of another exemplary clip according to the present invention.
FIG. 15 is a perspective view of another exemplary clip according to the present invention.
FIG. 16 is a perspective view of another exemplary clip according to the present invention.
FIG. 16A is a perspective view of another exemplary clip according to the present invention.
FIG. 17 is a perspective view of another exemplary clip according to the present invention.
FIG. 18 is a perspective view of another exemplary clip according to the present invention.
FIG. 18A is a detailed view of one section of the clip of Fig. 18.
FIG. 19 is a perspective view of another exemplary clip according to the present invention (inside mounted clip).
FIG. 20 is a perspective view of another exemplary clip according to the present invention (single sided clip).
FIG. 21 is a perspective view of an exemplary lever assembly according to the present invention.
FIG. 22 is a side view of an exemplary cable assembly according to the present invention.
FIG. 23 is a perspective view of another exemplary cable assembly according to the present invention.
FIG. 24 is a perspective view of another exemplary cable assembly according to the present invention.
FIG. 25 is a perspective view of an exemplary clip and housing plate assembly with the clip (including an extension tab) in a closed and locked position with a cable assembly according to the present invention.
FIGS. 26A - 26F show an exemplary progression of the assembly according to the method of the present invention, using perspective and side views of the clip and housing plate assembly of FIG. 2 and cable assembly of FIG. 22.
FIGS. 27A - 27F show an exemplary progression of the assembly according to the method of the present invention, using perspective and side views of the clip and housing plate assembly of FIG. 4 and cable assembly of FIG. 22.
FIGS. 28A - 28D show an exemplary progression of the assembly according to the method of the present invention, using perspective and side views of the dip and housing plate assembly of FIG. 6 and cable assembly with a vertical (or spherical) barrel-type cable end.

### DETAILED DESCRIPTION OF THE PREFERRED EMBODIMENT

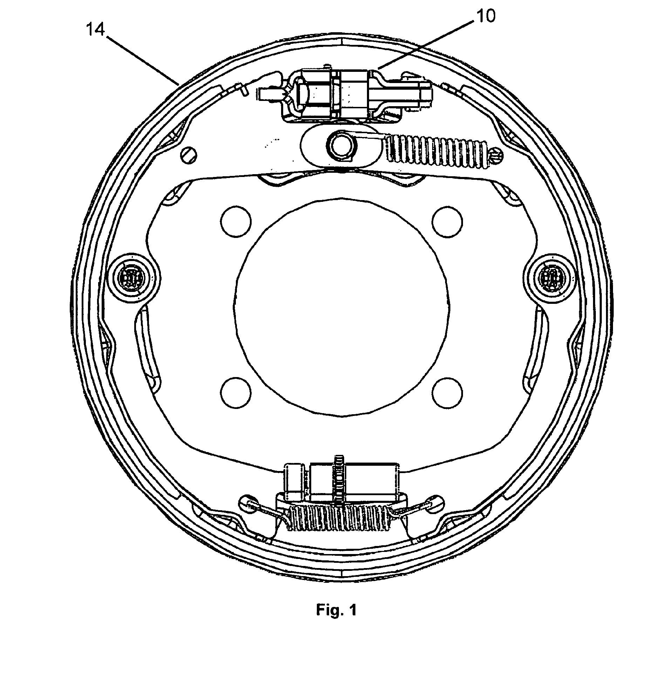

The present invention is directed to a unique solution for a cable end retention clip that allows for greater design flexibility (e.g. optimizing the system design) in the components of a brake system (e.g. drum brake assembly 14, Fig.1). It is contemplated that the present invention may provide an easier and more robust installation/retention mechanism for a cable assembly within the greater brake system, principally in the cases where the cable assembly is not under a tensional load when it is first assembled. The examples provided in this application will focus on the installation/retention mechanism in an expander component assembly of the brake system (e.g. an expander component assembly that is used in the parking brake function), although use of this inventive clipping system in other areas in the brake system is contemplated. It is contemplated that all of the components discussed below may be constructed of any number of materials that are appropriate to be used in the environment that a brake system is exposed to, including metals, plastics, ceramics, or any combination thereof. The main elements of the present invention are a housing plate assembly (including a housing plate member and a lever assembly) and a clip, all adapted to allow for loading, unloading and retaining a cable end. The clip may be generally located outside of the housing plate assembly and rotatably attached thereto, although embodiments are contemplated where the clip (or portions thereof) is located within the housing plate assembly.

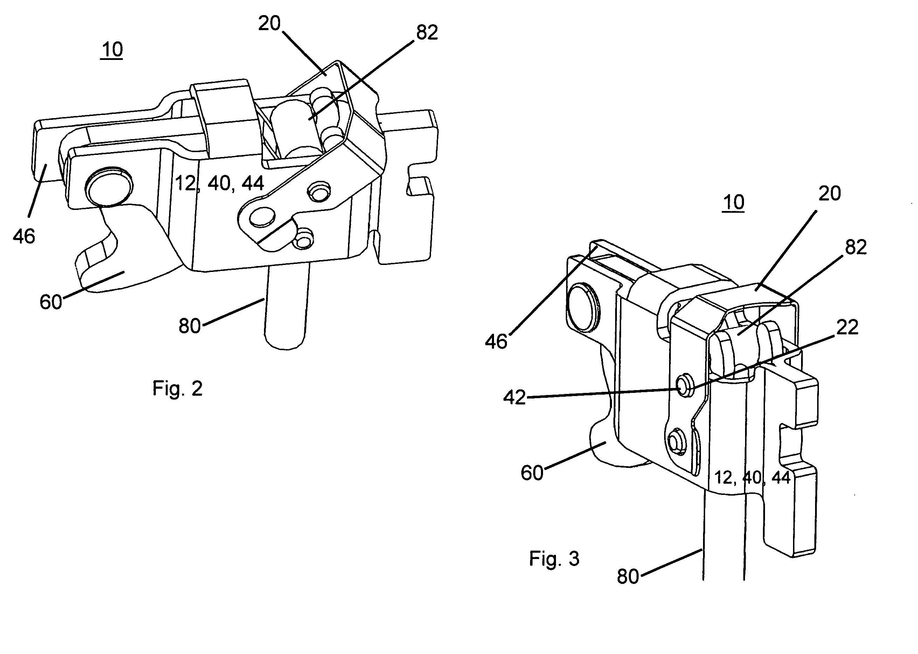

The present invention is illustrated in a number of exemplary embodiments, as shown in Figs. 2-9B. The present invention, a clip and housing plate assembly 10, should be capable of ("to accommodate") loading, unloading and retaining a cable end 82 within the assembly 10 (as shown with exemplary cable assemblies 80. These exemplary figures show the assembly 10 in either the "open" or "loading" (Figs. 2, 4, and 6) position and "closed" or "locked" (Figs. 3, 5, 7, 8,and 9A-B) position. The clip and housing plate assembly 10 may include a clip member 20 and a housing plate assembly 12 (comprising at least a housing plate member 40 and a lever assembly 60), wherein the clip member 20 is connectively rotationally attached to the housing plate member 40 via a first clip rotational feature 22 and a first housing rotational feature 42 (e.g. a pivoting structure and a pivot bearing structure). Generally, the clip member 20 may be disposed outside of an outer surface 44 of the housing plate member 40 or inside of an inner surface 46. The assembly 10 may also include a lever assembly 60, which may be disposed at least partially between the inner surfaces 46 of the housing plate member 40 (e.g. between the first and second housing wall portions). Each of the components introduced above will be further detailed In the paragraphs below and in descriptions of illustrative examples/embodiments. It should be appreciated that the structures of both the rotational and locking features discussed and described herein could be included on the clip member 20 or the housing plate assembly 12 interchangeably (e.g. clip rotational feature/housing rotational feature), but for the sake of brevity, only one configuration is described. It should also be appreciated that the rotational features act together or cooperate in such as way as to allow the clip member 20 to rotate about a portion of the housing plate member 40.

### Housing Plate Member 40

The housing plate member 40 may serve to provide a base structure for the clip and housing plate assembly 10. It may be a unitary piece (e.g. preferably a single stamped or cast piece of metal) or be an assembly of multiple pieces. The member may also provide for both rotational features and locking features, discussed in further detail below and in additional sections of the application.

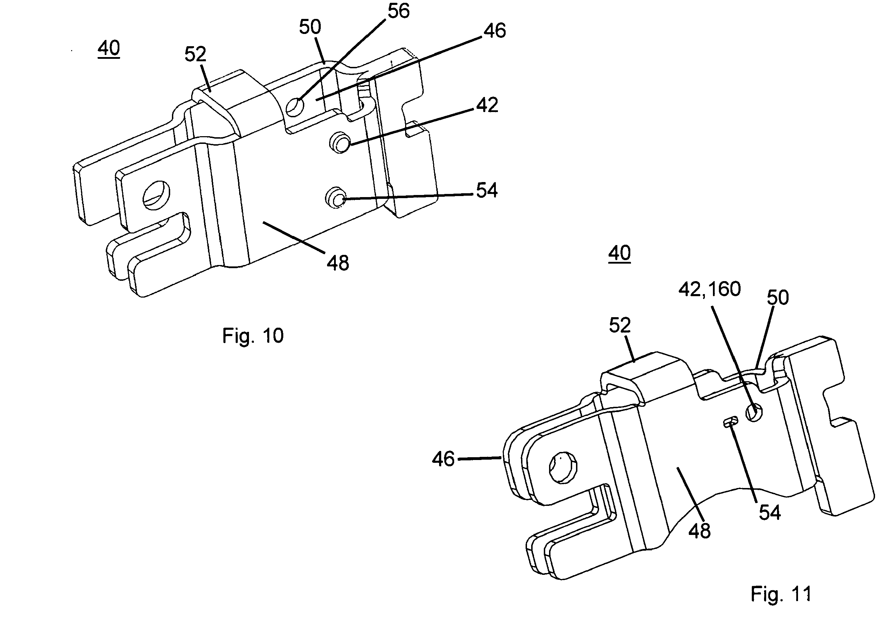

In one exemplary embodiment, as illustrated in Figs. 10 and 11, the member 40 is a unitary piece with a first housing wall portion 48, a second (opposing) housing wall portion 50 (with a gap therebetween) and a middle housing wall portion 52, connectively spanning the two wall portions. Figs. 10 and 11 each show exemplary rotational and locking features, discussed in further detail below.

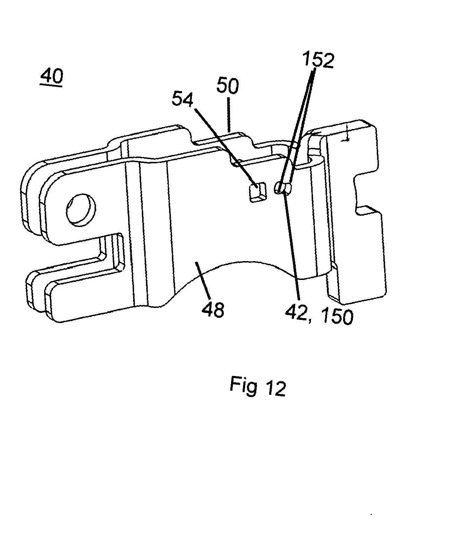

In a second exemplary embodiment, as illustrated in Fig. 12, the member 40 is an assembly with a first housing wall portion 48, a second (opposing) housing wall portion 50 (with a gap therebetween), but not including a middle housing wall portion 52. Fig. 10 shows yet another exemplary rotational and locking feature, discussed in further detail below.

### Housing Rotational Features 42, 56

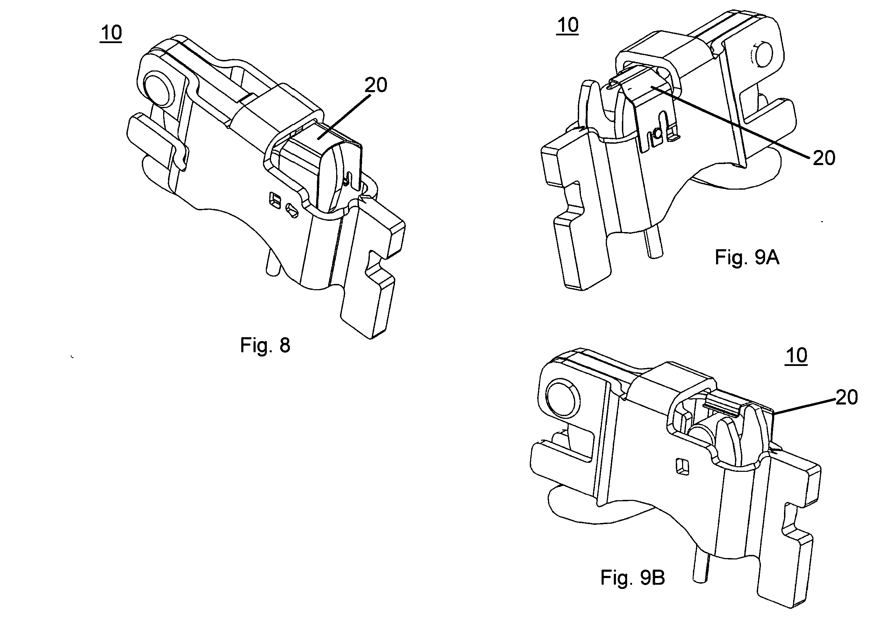

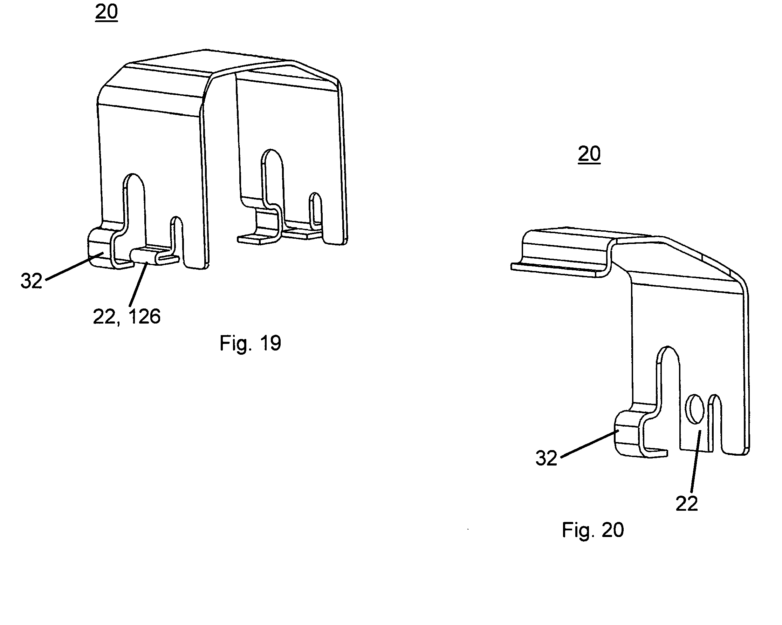

The housing rotational features 42, 56 may serve to provide a means to allow for rotary movement of the clip member 20 about the housing plate assembly 12. The features may allow for an infinitely adjustable rotation or rotation in distinct increments. Depending on the clip 20 embodiment (e.g. clip 20 illustrated in Figs. 9A and 20), it is contemplated that only one housing rotational feature may be necessary. There are numerous configurations of these features 42, 56 contemplated and the examples discussed below should not be considered as limiting. Preferably, the rotational feature may comprise structures such as round holes, other shaped holes, raised or depressed formations, cylindrical structures, or the like. It is contemplated that the first housing rotational feature is disposed on the first housing wall portion 40 and the second housing wall portion 50 may include a second rotational feature 56 (when necessary) generally disposed opposite of the first housing rotational feature 42. These features 42, 56, may be constructed similarly or may have distinct and different designs.

In a first exemplary embodiment, as illustrated in Fig. 10, the first housing wall portion 48 may include a first housing rotational feature 42 disposed on a first housing wall portion and projecting outwardly from the outer surface. This feature 42 functions to provide a bearing surface that at least partially mates with a rotational feature on the clip 20, thus allowing the clip 20 and the housing 40 to rotate about each other. It is contemplated that a similar rotational feature (feature 56) may be present on the second wall portion 50, although it not shown in the figure. It is also contemplated that the feature 42 may be on the inside of the housing wall portion and projecting inwardly from the inner surface (e.g. for an embodiment where the clip 20 is located inside of housing plate member).

In the first exemplary embodiment, the feature 42 is a cylindrical structure (e.g. a three-dimensional profile) formed in the wall portion 48, although it is contemplated that this may be any number of shapes. It is preferred that the feature 42 project outwardly at least a distance that is at least equivalent to or greater than that of the thickness of the clip 20, even more preferably, projecting outward more than the distance of the thickness of the clip 20 plus the distance of at least one housing locking feature 54.

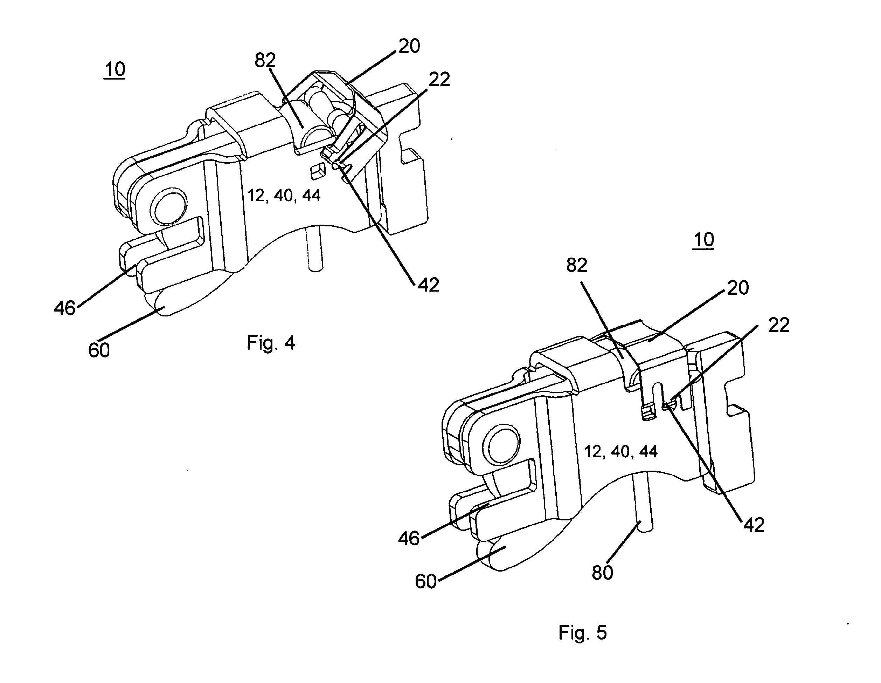

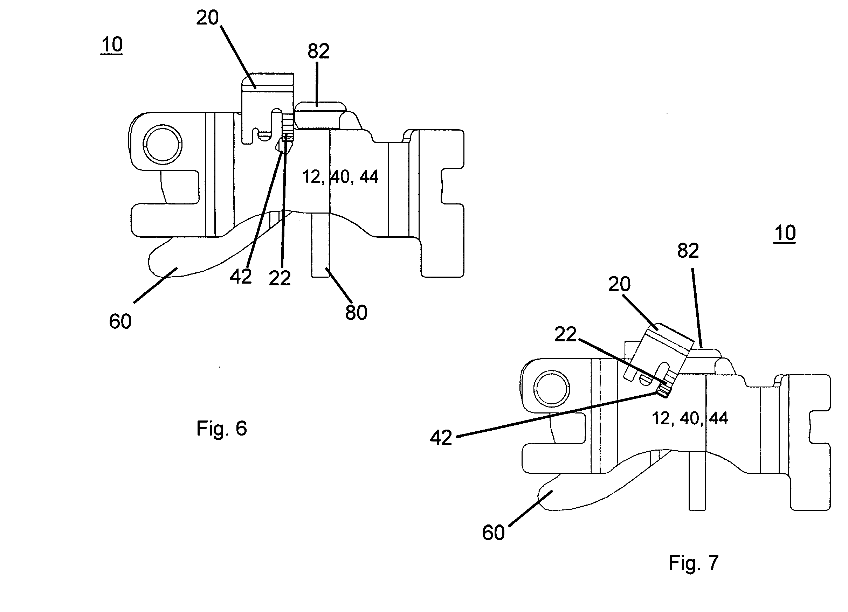

In the first exemplary embodiment, the second rotational feature 56 (in the second housing wall portion 50) may function also as a locator for the clip 20 and may allow for some amount of play in the movement of the clip 20 (e.g. transverse movement of about 1mm or more). In this example, the feature 56 may be a hole or slot in the second housing wall portion, as illustrated in Fig. 4, which is adapted to receive a second rotational feature of the clip 20 (e.g. a tab as illustrated in Figs. 5 and 6) that does not precisely match the shape of the feature 56. It is believed that having this 'play' in the rotational features may allow for greater manufacturing tolerances on each relevant component of the system (e.g. the clip 20 and the housing assembly 12 do not have to match exactly).

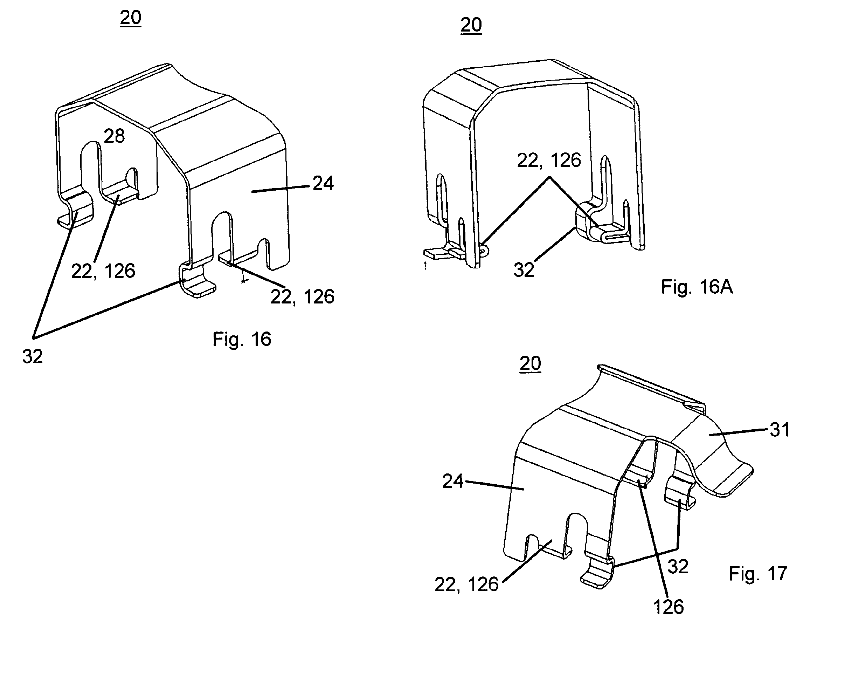

In a second exemplary embodiment, as illustrated in Fig. 12, the first and second rotational features 42, 56 are shaped slots 150 that allow for limited movement of the clip member 20 (e.g. from a loading position to a locked position). These slots 150 include a pair of pivot bearing points (or surfaces) 152, on which the rotational features of the clip 20 pivot in this example, the rotational features of the clip member 20 are turned-in tabs 126 (shown in Fig. 16 and 17), discussed in further detail in the clip section below.

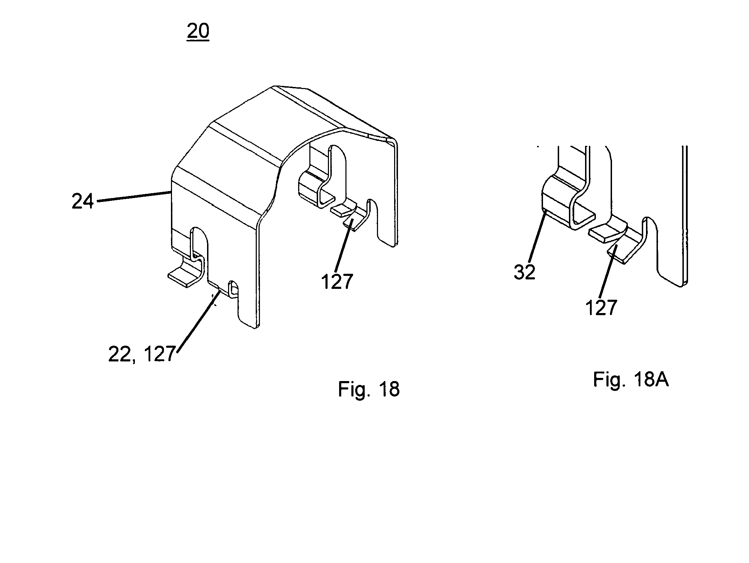

In a third exemplary embodiment, as illustrated in Fig. 11, the first and second rotational features 42, 56 are circular holes 160, which serve as mating surfaces for the rotational features of the clip 20. In this example, the rotational features of the clip member 20 are turned-in split tabs 127 (shown in Fig. 18 and 16A), discussed in further detail in the clip section below. It is believed that this embodiment may be preferred due to the relative ease of forming and maintaining a generally circular hole in the housing plate member 40 (e.g. via a round punch).

### Housing Locking Feature 54

It is contemplated that the first housing wall portion 48, the second housing wall portion 50, or both, may also include at least one housing locking feature 54. This locking feature 54 functions to provide a positive rotational locking function in conjunction with the locking feature of the clip. The housing locking feature 54 may comprise any structure that functions to keep the housing plate member 40 and the clip member 20 from rotating with respect to one another. It is preferred that the locking feature be designed such that relatively high rotational force (e.g. greater than about 10 Newtons) is applied to the top of the clip 20. It is contemplated and preferred that this feature 54 may include an arcuate surface feature (e.g. having a three-dimensional profile) or may be a through-hole in the first, second, or both wall portions 48, 50 although it is contemplated that this may be any number of shapes.

In a first exemplary embodiment, as illustrated in Fig. 10, the feature 54 is a outwardly projecting surface that projects outwardly (e.g. about 1 mm to about 12mm) from the outer surface of the wall and at least partially conforms to a locking feature of the clip 20. It is contemplated that the outwardly projecting surface may be circular, tear drop, square, rectangular, or of any geometric shape. In a preferred embodiment, the outwardly projecting surface is a circular shape. It should be noted that the feature 54 may project inwardly, especially in the case where the clip 20 is located inside of the housing (e.g. clip in Fig. 8)

In a second exemplary embodiment, as illustrated in Figs. 11 and 12, the feature 54 is a through-hole. It is contemplated that the through-hole may be circular, square, rectangular, or of any geometric shape. In a preferred embodiment, the through-hole is a square or rectangular shape that conforms at least partially to the mating shape of a square locking feature of the clip, discussed in further detail below.

### Clip Member 20

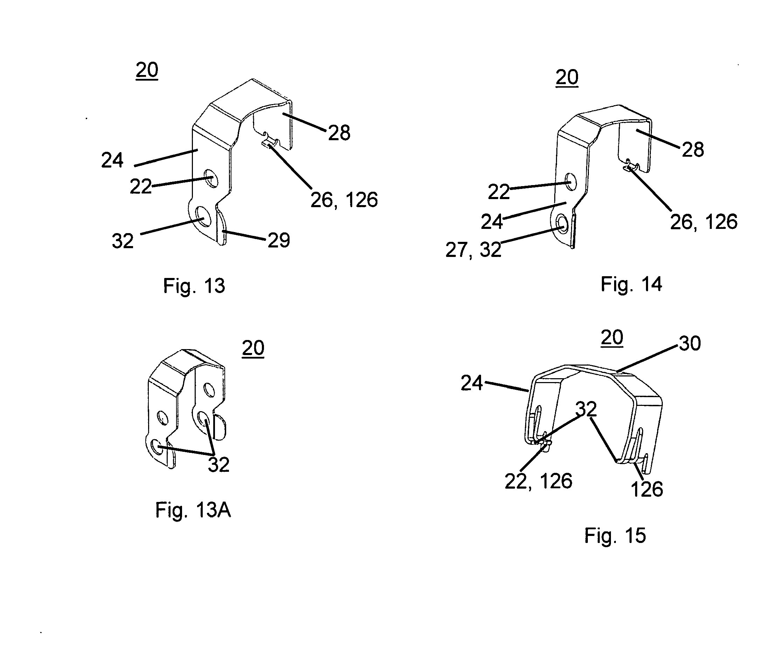

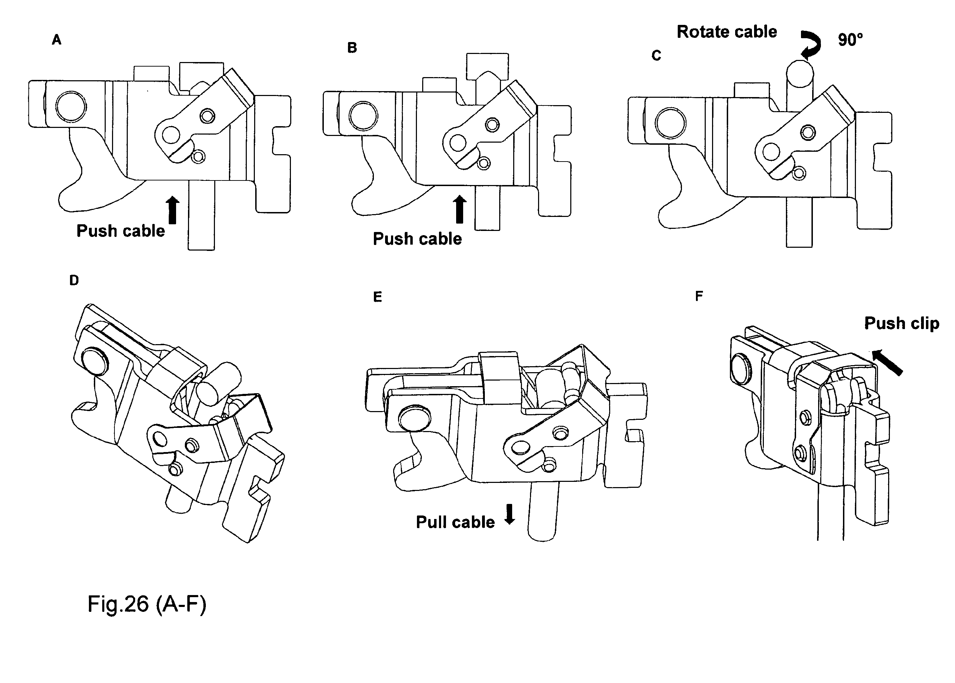

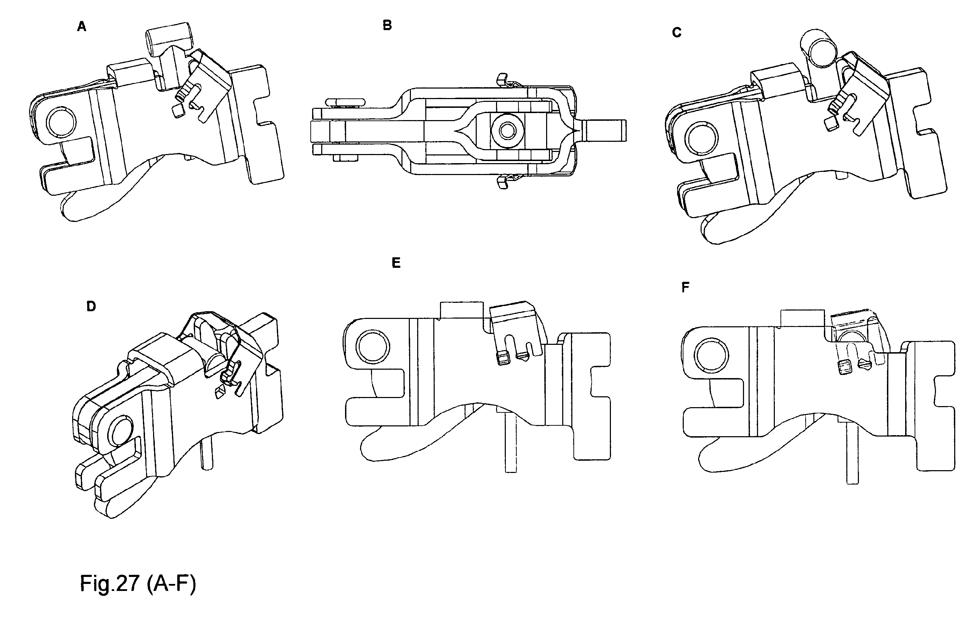

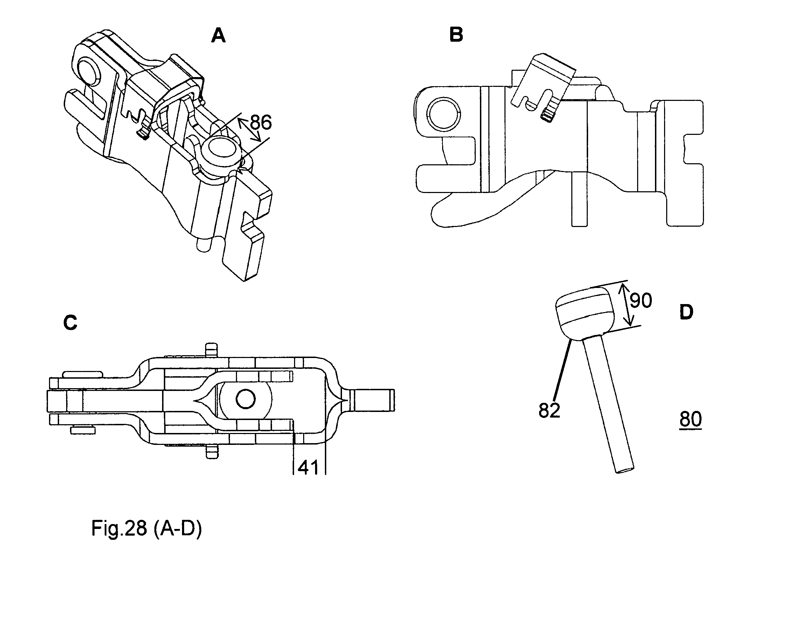

The clip member 20, when assembled to the housing plate assembly 12 functions to allow for loading, unloading and retaining the cable end 82 within the housing plate assembly 12. It may be generally disposed outside the outer surface (or inside the inside surface) of the housing plate member 40 and rotatably connected thereto. Generally, the clip 20 may have any shape which allows it to perform the recited function, including a "U" shape, "J" shape, or "C" shape, although other local geometric features are possible. Exemplary clip members are shown in Figs. 13-20. It is contemplated that during installation or removal of the cable end 82, the clip member 20 is rotatably disposed towards a forward (open) loading position, for example as illustrated in Figs. 26A-E and Figs. 27A-D (or a rearward (open) loading position as illustrated in Fig. 28A - note both forward and rearward loading positions may also be known as the "open position"). It is contemplated that for retention of the cable end 82, the clip 20 is rotatably disposed towards a locked retention position, for example as illustrated in Figs. 26F, 27E-F, and 28B. In this locked position the at least one housing locking feature 54 and an at least one clip locking feature 32 are engaged.

In a preferred embodiment, the clip member 20 is constructed of a material that has some geometric memory or elastic deformation. In other words, the material returns to or nearly to its original shape after it has been subjected to a physical stress (e.g. as would occur during loading of the clip onto the housing or when the clip is moved to and from the locked retention position. Generally, it is preferred that the clip is constructed of a spring steel, although other materials that meet the above "memory" requirements are contemplated. It is contemplated that the distance between the first clip wall portion 24, and the opposing second clip wall portion 28 is about equivalent to (e.g. +/- about 10%) the outside width of the housing plate assembly 12, at least in the areas where they interact.

The clip member 20 can be generally defined as including a first clip rotational feature 22 disposed on a first clip wall portion 24, an opposing second rotational feature 26 disposed on a second clip wall portion 28, a middle clip wall portion 30 connectively spanning between the first and second clip wall portions, and at least one clip locking feature 32 disposed on the first clip wall portion, the second clip wall portion, or both. It is contemplated that any combination of the clip locking and rotational features as illustrated in the figures and as described below may be used to provide the needed functionality. It is also contemplated that the clip 20 may only have a first clip wall portion 24 and a middle clip wall portion 30, for example as shown in Figs. 9A-B and 20.

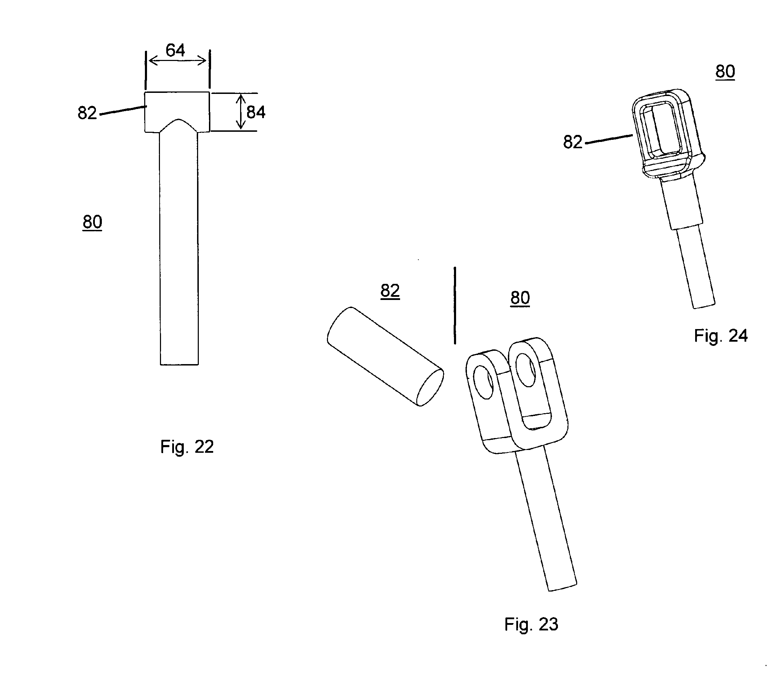

It is contemplated that the relative dimensions of the clip member 20 are such that when the clip and housing plate assembly is the lock position, the middle clip wall portion 30 is disposed above the nesting portion 64 and the cable end 82. Preferably, the middle clip wall portion 30 has a fore-aft length C_{L} and profile that when in the locked position, provides for a gapping distance between any part of the housing plate member 40 or of the nesting portion 64(discussed in the lever assembly section below) that is no more than about 100% that of that of a cable end diameter value 84 (or height value 90). In one preferred embodiment, the clip member (locked position) is disposed above an upper edge portion of the housing plate member 40 or of the nesting portion 64 with no more than an axial distance equivalent of about 175% of that of a cable end diameter value 84. More preferably, the axial distance is no more than about 150%, and most preferably no more than about 125% of that of a cable end diameter value 84. It is also preferable that the length C_{L} and profile is small enough such that the clip 20, when in the forward loading position (e.g. Fig. 23A) a gap L_{G} is created allowing the cable end to pass. Preferably, this loading gap L_{G} is at least equivalent to a transverse length 86 of the cable end 82, more preferably about 125% of the transverse length 86, and most preferably about 150% of the transverse length 86.

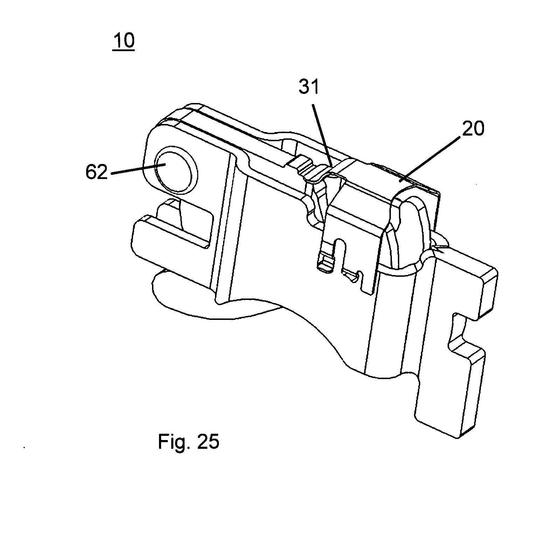

It is also contemplated that the length C_{L} and profile may be locally larger (e.g. extension tab 31) and may be particularly useful in the case where the housing plate member 40 does not include a middle housing wall portion 52, for example as illustrated in Fig. 25. The extension tab may also function as a stopper for the rotation of the lever assembly 60.

The middle clip wall portion 30 may also include other localized geometric features, for example: dimples; bent tabs or walls; or holes, which may aid in retaining the cable end 82 or may serve other desired functions.

### Clip Rotational Features 22, 26

The clip rotational features 22, 26 may serve to provide a means to allow for rotary movement of the clip member 20 about the housing plate assembly 12. The features 22, 26 may allow for an infinitely adjustable rotation or rotation in distinct increments. There are numerous configurations of these features 22, 26 contemplated and the examples discussed below should not be considered as limiting. It is contemplated that the clip rotational feature is disposed on the first clip wall portion 24 and the second clip wall portion 28 may include a second rotational feature 26 generally disposed opposite of the first clip rotational feature 22. These features 22, 26 may be constructed similarly or may have distinct and different designs. It should be apparent to one skilled in the art which clip rotational feature can function with which housing rotational feature and which cannot. It should also be apparent that clip rotational feature 22 and 26 could be similar in construction to each other or different from each other.

In a first exemplary embodiment, as illustrated in Figs. 13 and 14, the clip rotational features are circular holes that are adapted to mate to the rotational features of the housing rotational features 42, 56.

In a second exemplary embodiment, as illustrated in Figs. 15-17, the clip rotational features are shown as inwardly turned tabs 126. The inwardly turned tabs 126 are adapted to rotate within the slots 150 on the pivot bearing points (or surfaces) 152. It is contemplated that these tabs 126 may be a single material thickness (e.g. as illustrated In Figs. 15, 16, and 17) or be multiple material thicknesses (e.g. as a turned over tabs 126 as illustrated in Fig. 16A). It may also be an outwardly turned tab 126 as shown in Fig. 19.

In a third exemplary embodiment, as illustrated in Figs. 18 and 18A, the clip rotational features are shown as inwardly turned split- tabs 127. These split tabs 127 adapted to rotate within the circular holes 160 of the housing 40. It may also be outwardly turned split-tabs 127, not shown.

### Clip Locking Feature 32

It is contemplated that either of the clip wall portions 24, 28, or both, include at least one locking feature 32. This feature 32 may serve to "lock" the clip 20 in place when the clip 20 is rotated to the locked position (e.g. Figs. 26F, 27E-F, and 28B), thus preventing clip rotation unless a relatively high rotational force (e.g. greater than about 10 Newtons, but not so great that you damage the clip such that it no longer can provide its intended function) is applied to the top of the clip 20. It is contemplated that the force required to move the clip 20 from the open position to the locked position is less than that of moving it out of the locked position. Preferably, the force required to move the clip 20 out of the locked position (e.g. disengage the "lock") is at least about 25% greater than the force required to move the clip 20 from the open position to the locked position, more preferably at least about 50% greater, and most preferably at least about 100% greater. In a first exemplary embodiment, as illustrated in Fig. 13, the clip locking feature 32 (one side only), is a through-hole that is adapted to mate with the at least one housing locking feature 54. In Fig. 13A, two such locking features 32, on opposing walls are illustrated. The clip 20 may also include a ramp portion 29 which may provide a lead-in function when the clip 20 is rotated towards the locked position.

In a second exemplary embodiment, as illustrated in Fig. 14, the clip locking feature 32 (one side only), is a pocket 27 formed in the wall portion 24, again adapted to mate with the at least one housing locking feature 54.

In a third exemplary embodiment, as illustrated in Fig. 15, the clip locking feature 32 is an inwardly turned tab (both sides).

In a fourth exemplary embodiment and the preferred embodiment, as illustrated in Figs. 16, 17, 18, 18A, 19, and 20, the clip locking feature 32 is a rounded locking tab that has a shape that generally complements the preferred locking feature 54 of the housing plate member 40.

### Lever Assembly 60

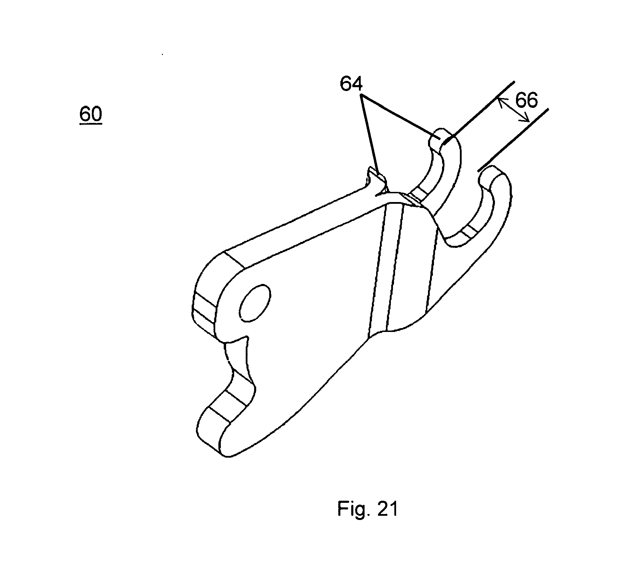

It is contemplated that a lever assembly 60 is part of the housing plate assembly 12 and may be at least partially disposed between an inner surfaces 46 of the housing plate member 40 and rotationally attached thereto. This lever assembly 60 functions to translate the movement of the cable assembly 80 (into the brake 14) and provide a nesting place (e.g. nesting portion 64) for the cable end 82. It is contemplated that the lever assembly 60 may be rotatably connected (e.g. via a pivot means) to the housing plate member 40 at or near a rearward portion area of the housing plate member 40 via a fastener (e.g. rivet 62, see Fig. 25). It is contemplated that the lever assembly 60 may be a single piece or a multiple piece assembly, but preferably includes a nesting portion 64 (e.g. a single or multi-pronged hook). An exemplary multi-pronged lever assembly 60 is illustrated in Fig. 21, a single hook version is not shown.

### Nesting Portion 64

It is contemplated that the nesting portion 64 functions to hold the cable end 82 of the cable assembly 80. The shape or profile (e.g. a hook or bent post) of the nesting portion 64 should at least partially complement that of the cable end 82. It is contemplate that the nesting portion 64 may be a single hook (e.g. for an eyelet-type cable end) or a multi-pronged hook (e.g. for a horizontal barrel-type cable end, a clevis-pin type cable end, or a vertical barrel-type cable end). It is also contemplated that the nesting portion is open towards the top (e.g. in a "U" shape) such that the cable end 82 can move freely in and out of it.

In a first exemplary embodiment, illustrated in Figs. 21, 26A-F and 27 A-F, the nesting portion 64 may be constructed of two opposing plates with a gapping portion 66 therebetween. The gapping portion 66 with a gapping distance value at least the same as the diameter value 84 of the cable end 82 but not greater than the transverse length 86 of the cable end 82 (for the case of a horizontal barrel-type cable end or a clevis-pin type cable end).

In a second exemplary embodiment, illustrated in Figs. 21 and 28A-C, the nesting portion 64 may be constructed of two opposing plates with a gapping portion 66 therebetween. The gapping portion 66 with a gapping distance value less than the transverse length 86 of the cable end 82 (for the case of a vertical (or spherical) barrel-type cable end).

In a third exemplary embodiment, (not shown) the nesting portion is a single plate over which an eyelet-type cable end may be loaded (although you could use an eyelet-type with a lever assembly 60 that has two opposing plated).

In one preferred embodiment, the nesting portion 64 is disposed such that at least about 50% of it is forward of the middle housing wall portion 52, more preferably at least about 75%, and most preferably wherein the entire nesting portion is disposed forward of the middle housing wall portion 52, at least in the area (e.g. plus or minus about 15mm) surrounding where the cable end 82 mates with the nesting portion 64.

### Cable Assembly 80 and Cable End 82

In the present invention, the cable assembly 80 and cable end 82 are of the type typically used in braking systems. It is contemplated that the cable assembly may have an end portion that enables the end of the cable assembly 82 to be held in place (including loading and unloading) in the housing 40 (e.g. in the nesting portion 64) by any known end which achieves this. Examples of such ends 82 include a horizontal barrel-type cable end, a clevis-pin type cable end, a vertical (spherical) barrel-type cable end, or an eyelet-type cable end, all of which are commonly known in the industry (as illustrate in Figs. 22, 23, 28D, and 24 respectively).

In a preferred embodiment, as illustrated in Fig. 22, the cable end 82 is a barrel-type end portion (or a clevis-pin type cable end) with a diameter value 84 of at least 4mm and a transverse length 86 of at least 125% of the diameter value. In another preferred embodiment, as illustrated in Fig. 24D, the cable end 82 is a vertical (or spherical barrel-type cable end with a height value 90 of at least 4mm and a transverse length 86 of at least 125% of the diameter value.

### Method

It is contemplated (and illustrated in Figs. 26A-F, 27A-F, and 28A-C) that a method of loading and retaining the cable end of the cable assembly in the clip and housing plate assembly (as described in the preceding paragraphs) may include the steps of: a. providing the clip and housing plate assembly wherein the clip member is rotatably disposed towards the forward loading position (or rearward position); b. feeding the cable end through a bottom opening between the two opposing housing plate members (through and past the gapping portion of the nesting portion wherein the cable end is rotationally disposed such that it fits though the gapping portion or a gap (e.g. forward gap 41) between the housing and the lever assembly); c. rotating the cable end, if necessary, such that the transverse length is perpendicular to the gapping portion; d. nesting the cable end into or onto the nesting portion: e. rotating the clip member towards the lock position; f. engaging the at least one clip locking feature to the at least one housing locking feature, thus loading and retaining the cable end into the clip and housing plate assembly.

In one example, as illustrated in Figs. 26A-F and Figs. 27A-F, the member 40 is a unitary piece with a first housing wall portion 48, a second (opposing) housing wall portion 50 (with a gap therebetween) and a middle housing wall portion 52, connectively spanning the two wall portions. Also illustrated is an exemplary lever assembly 60 that is connectively (and rotationally via a pivot 62) disposed (at least partially) inside of the inner surface 46 of the member 40, forming the housing plate assembly 12. The cable assembly is fed up through the gapping portion of the lever assembly which allows for the loading of a cable end 82.

In another example, as illustrated in Figs. 28A-C, the member 40 is a unitary piece with a first housing wall portion 48, a second (opposing) housing wall portion 50 (with a gap therebetween) and a middle housing wall portion 52, connectively spanning the two wall portions. Also illustrated is an exemplary lever assembly 60 that is connectively (and rotationally via a pivot 62) disposed (at least partially) inside of the inner surface 46 of the member 40, forming the housing plate assembly 12. In this example, there is a forward gap 41 which is shown, which allows for the loading of a cable end 82 through the assembly 12, in front of the lever assembly 60. It is also contemplated, but not shown, that the cable end could be spherical and would load in a similar fashion.

Unless stated otherwise, dimensions and geometries of the various structures depicted herein are not intended to be restrictive of the invention, and other dimensions or geometries are possible. Plural structural components can be provided by a single integrated structure. Alternatively, a single integrated structure might be divided into separate plural components. In addition, while a feature of the present invention may have been described in the context of only one of the illustrated embodiments, such feature may be combined with one or more other features of other embodiments, for any given application. It will also be appreciated from the above that the fabrication of the unique structures herein and the operation thereof also constitute methods in accordance with the present invention.

The preferred embodiment of the present invention has been disclosed. A person of ordinary skill in the art would realize however, that certain modifications would come within the teachings of this invention. Therefore, the following claims should be studied to determine the true scope and content of the invention.

Any numerical values recited in the above application include all values from the lower value to the upper value in increments of one unit provided that there is a separation of at least 2 units between any lower value and any higher value. As an example, if it is stated that the amount of a component or a value of a process variable such as, for example, temperature, pressure, time and the like is, for example, from 1 to 90, preferably from 20 to 80, more preferably from 30 to 70, it is intended that values such as 15 to 85, 22 to 68, 43 to 51, 30 to 32 etc. are expressly enumerated in this specification. For values which are less than one, one unit is considered to be 0.0001, 0.001, 0.01 or 0.1 as appropriate. These are only examples of what is specifically intended and all possible combinations of numerical values between the lowest value and the highest value enumerated are to be considered to be expressly stated in this application in a similar manner.

Unless otherwise stated, all ranges include both endpoints and all numbers between the endpoints. The use of "about" or "approximately" in connection with a range applies to both ends of the range. Thus, "about 20 to 30" is intended to cover "about 20 to about 30", inclusive of at least the specified endpoints.

The disclosures of all articles and references, including patent applications and publications, are incorporated by reference for all purposes.

The term "consisting essentially of" to describe a combination shall include the elements, ingredients, components or steps identifled, and such other elements ingredients, components or steps that do not materially affect the basic and novel characteristics of the combination.

The use of the terms "comprising" or "including" to describe combinations of elements, ingredients, components or steps herein also contemplates embodiments that consist essentially of the elements, ingredients, components or steps.

Plural elements, ingredients, components or steps can be provided by a single integrated element, ingredient, component or step. Alternatively, a single integrated element, ingredient, component or step might be divided into separate plural elements, ingredients, components or steps. The disclosure of "a" or "one" to describe an element, ingredient, component or step is not intended to foreclose additional elements, ingredients, components or steps.

## Claims

1. A clip and housing plate assembly capable of loading, unloading and retaining a cable end within the housing plate assembly comprising:
a clip member including at least:
a first clip rotational feature disposed on a first clip wall portion,
a middle clip wall portion connected to the first clip wall portion, and at least one clip locking feature disposed on the first clip wall portion;
a housing plate member including at least:
a first housing rotational feature disposed on a first housing wall portion, and
at least one housing locking feature disposed on the first housing wall portion;
a lever assembly disposed between the first and second housing wall portion and rotationally connected to the housing plate member, the lever assembly including
a nesting portion adapted to mate with the cable end; and wherein the clip member is disposed at least partially outside an outer surface of the of the housing plate member and rotatably connected thereto.

2. The clip and housing plate assembly according to claim 1, wherein the cable end is selected from the group consisting of a clevis-pin type cable end, vertical (spherical) barrel type, transverse barrel type, and an eyelet-type cable end.

3. The clip and housing plate assembly according to claim 1 or claim 2, wherein the lever assembly is rotatably connected to the housing plate member at a rearward portion area of the housing plate member, between the first and second housing wall portions and such that at least 50% of the nesting portion is disposed forward of a middle housing wall portion, the middle housing wall portion connectively spanning between the first and second housing wall portions.

4. The clip and housing plate assembly according to any of the preceding claims, wherein the nesting portion comprise two opposing plates with a gapping portion therebetween with a gapping distance value at least the same as the diameter value of the cable end but not greater than the transverse length of the cable end.

5. The clip and housing plate assembly according to any of the preceding claims, wherein the first clip rotational feature comprises a first through hole in the clip member.

6. The clip and housing plate assembly according to any of the preceding claims, wherein the first housing rotational feature comprises a three dimensional proflle that projects away from the outer surface of the of the housing plate member.

7. The clip and housing plate assembly according to any of the preceding claims, wherein the at least one clip locking feature comprises a second through hole in the clip member and the at least one housing locking feature comprises a three dimensional profile that projects away from the outer surface of the of the housing plate member.

8. The clip and housing plate assembly according to any of claims 1 to 6, wherein the at least one clip locking feature comprises a ramp portion on the clip member and the at least one housing locking feature comprises a three dimensional profile that projects away from the outer surface of the of the housing plate member.

9. The clip and housing plate assembly according to any of the preceding claims, wherein during installation or removal of the cable end, the clip member is rotatably disposed towards an open loading position and further wherein during retention of the cable end, is rotatably disposed in a lock position, wherein the at least one clip locking feature and the at least one housing locking feature are engaged.

10. The clip and housing plate assembly according to claim 9, when the clip and housing plate assembly is the lock position, the middle clip wall portion is disposed above the nesting portion and the cable end and is disposed above an upper edge portion of the housing plate member no more than an axial distance equivalent of 125% of that of a cable end diameter.

11. The clip and housing plate assembly according to claim 9 or claim 10, when the clip and housing plate assembly is in the lock position, the middle clip wall portion is at least partially touching the nesting portion, the cable end, or both.

12. The clip and housing plate assembly according to any of the preceding claims, wherein the clip and housing plate assembly are part of a drum brake assembly and the cable end is part of a cable assembly for a parking brake.

13. The clip and housing plate assembly according to any of the preceding claims, wherein the clip member includes a second clip wall portion opposite the first clip wall portion and connected to the middle clip wall portion wherein the second clip wall portion includes a second clip rotational feature, a locking feature, or both.

14. The clip and housing plate assembly according to any of the preceding claims, wherein the clip member includes a second clip wall portion opposite the first clip wall portion and connected to the middle clip wall portion wherein the second clip wall portion includes a second clip rotational feature, a locking feature, or both.

15. A method of loading and retaining a cable end of a cable assembly in a clip and housing plate assembly comprising the steps of:
providing the clip and housing plate assembly,
the clip member including at least:
a first clip rotational feature disposed on a first clip wall portion,
a middle clip wall portion connected to the first clip wall portion, and at least one clip locking feature disposed on the first clip wall portion, further wherein the clip member is rotatably disposed towards the open loading position;
the housing plate assembly including at least:
a first housing rotational feature disposed on a first housing wall portion, and
at least one housing locking feature disposed on the first housing wall portion;
a lever assembly disposed between the first and second housing wall portion and
rotationally connected to the housing plate assembly, the lever assembly including a nesting portion adapted to mate with the cable end; and wherein the clip member is disposed at least partially outside an outer surface of the of the housing plate assembly and rotatably connected thereto;
feeding the cable end through a bottom opening between the two opposing housing wall portions;
nesting the cable end into the nesting portion;
rotating the clip member towards the lock position; and
engaging the at least one clip locking feature to the at least one housing locking feature, thus loading and retaining the cable end into the clip and housing plate assembly.
